# EUROPÄISCHE PATENTANMELDUNG

(11) **EP 1 050 536 A2**
(43) Veröffentlichungstag der Anmeldung: **08.11.2000**
(21) Anmeldenummer: 00109019.0
(22) Anmeldetag: 27.04.2000
(51) Int. Cl.: C07F 7/08

(54) **2-(Benz-)Imidazol-, 2-(Benz-)Oxazol- und 2-(Benz-)Thiazol-substituierte Silane**

(30) Priorität: 06.05.1999 DE 19920955
(71) Anmelder: Wacker-Chemie GmbH, 81737 München (DE)
(72) Erfinder: Abele, Bors Cajus, Dr., 84489 Burghausen (DE); Winterfeld, Jörn, Dr., 84489 Burghausen (DE)
(74) Vertreter: Fritz, Helmut, Dr.

(57) **Zusammenfassung**

Gegenstand der Erfindung sind 2-(Benz-)Imidazol-, 2-(Benz-)Oxazol- und 2-(Benz-)Thiazol-substituierte Silane der allgemeinen Formel (I)

RᵤR¹_{y}Si(A)ₐ (I),

in der
- **A**: einen Rest der allgemeinen Formeln (II) bzw. (III), 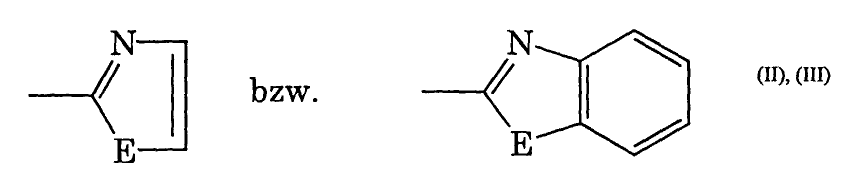
- **R**: ein Wasserstoff-Atom oder einen einwertigen, gegebenenfalls mit Halogen-, Sauerstoff-, Stickstoff-, Schwefel- oder Phosphoratomen substituierten Kohlenwasserstoffrest mit 1 bis 20 Kohlenstoffatomen,
- **R**^{**1**}: einen in α-Position zum Silicium-Atom verzweigten, einwertigen, gegebenenfalls mit Halogen-, Sauerstoff-, Stickstoff-, Schwefel- oder Phosphoratomen substituierten Kohlenwasserstoffrest mit 3 bis 30 Kohlenstoffatomen,
- **E**: ein Stickstoff-Atom, welches substituiert ist mit einem einwertigen, gegebenenfalls mit Halogen-, Sauerstoff-, Stickstoff-, Schwefel- oder Phosphoratomen substituierten Kohlenwasserstoffrest mit 1 bis 20 Kohlenstoffatomen, ein Sauerstoff- oder ein Schwefel-Atom,
- **u**: die Werte 0, 1, 2 oder 3 und
- **a**: die Werte 1, 2 oder 3 und
- **y**: die Werte 1, 2 oder 3 bedeuten.

## Beschreibung

Die Erfindung betrifft 2-(Benz-)Imidazol-, 2-(Benz-)Oxazol- und 2-(Benz-)Thiazol-substituierte Silane und ein Verfahren zu deren Herstellung.

Die Bezeichnung (Benz-)Imidazol bedeutet hier sowohl Imidazol als auch Benzimidazol. Gleiches gilt für die Bezeichnungen (Benz-)Oxazol und (Benz-)Thiazol.

Die wohl am besten untersuchten Imidazol-substituierten Silane enthalten Trimethylsilyl-Gruppen [Moore et al., J. Org. Chem. 1982, 47, 1489; Jutzi et al., Chem. Ber. 1973, 106, 2815; Pinkerton et al., J. Heterocyclic Chem. 1972, 9, 67].
2-(Trimethylsilyl)-1-methylimidazol ist prinzipiell über Salzeliminierungsreaktionen zwischen Trimethylchlorsilan und 2-Lithio-1-methylimidazol zugänglich [Jutzi et al., Chem. Ber. 1973, 106, 2815].

2-(Trimethylsilyl)-oxazol bzw. -thiazol sind gleichermaßen literaturbekannt [Dodoni et al., J. Org. Chem. 1988, 53(8), 1748; Hodges et al., J. Org. Chem. 1991, 56, 449].

Die Synthese der entsprechenden Derivate ausgehend von den lithiierten Verbindungen liefert besonders bei den Imidazol-Derivaten recht gute Ausbeuten.

Von 2-Imidazol-(a), 2-Oxazol-(b) und 2-Thiazol-(c)-substituierten Silanen mit einer tertiären Kohlenwasserstoffgruppe in α-Position zum Silicium-Atom sind nur besondere Vertreter bekannt:
(a)
   1. Imidazol-Ringe sind in 4- bzw. 5-Position alkylsubstituiert,
   2. Imidazol-Ringe sind in 1-Position (am Stickstoff-Atom) - CH₂OH, -SO₂NMe₂, -OCH₂Ph, -CH₂OEt bzw. -CH₂OMe substituiert und weisen Substituenten in 4- bzw. 5-Position auf.
(b) Es sind nur entsprechende Verbindungen mit substituierten Oxazol-Ringen bekannt.
(c) In der Reihe der Thiazol-substituierten Silane mit unsubstituiertem Thiazol-Ring ist nur 2-(tert.-Butyldimethylsilyl)-thiazol bekannt.

2-Benzimidazol-, 2-Benzoxazol- und 2-Benzthiazol-substituierte Silane mit einer tertiären Kohlenwasserstoff-Gruppe in α-Position zum Silicium-Atom sind in der Literatur nicht bekannt.

2-(Benz-)Imidazol-, 2-(Benz-)Oxazol- und 2-(Benz-)Thiazol-substituierte Silane mit einer oder mehreren sekundären Kohlenwasserstoff-Gruppe in α-Positionen zum Silicium-Atom sind in der Literatur nicht bekannt.

Aufgabe der Erfindung ist es, 2-(Benz-)Imidazol-, 2-(Benz-)Oxazol- und 2-(Benz-)Thiazol-substituierte Silane mit einer oder mehreren tertiären oder sekundären Kohlenwasserstoff-Gruppen in α-Position zum Silicium-Atom, insbesondere über ein wirtschaftliches Verfahren, zur Verfügung zu stellen.

Gegenstand der Erfindung sind 2-(Benz-)Imidazol-, 2-(Benz-)Oxazol- und 2-(Benz-)Thiazol-substituierte Silane der allgemeinen Formel (I)

RᵤR¹_{y}Si(A)ₐ (I),

in der
- **A**: einen Rest der allgemeinen Formeln (II) bzw. (III), 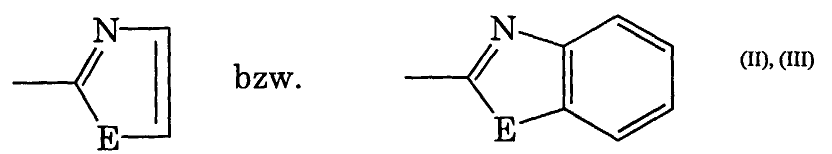
- **R**: ein Wasserstoff-Atom oder einen einwertigen, gegebenenfalls mit Halogen-, Sauerstoff-, Stickstoff-, Schwefel- oder Phosphoratomen substituierten Kohlenwasserstoffrest mit 1 bis 20 Kohlenstoffatomen,
- **R**^{**1**}: einen in α-Position zum Silicium-Atom verzweigten, einwertigen, gegebenenfalls mit Halogen-, Sauerstoff-, Stickstoff-, Schwefel- oder Phosphoratomen substituierten Kohlenwasserstoffrest mit 3 bis 30 Kohlenstoffatomen,
- **E**: ein Stickstoff-Atom, welches substituiert ist mit einem einwertigen, gegebenenfalls mit Halogen-, Sauerstoff-, Stickstoff-, Schwefel- oder Phosphoratomen substituierten Kohlenwasserstoffrest mit 1 bis 20 Kohlenstoffatomen, ein Sauerstoff- oder ein Schwefel-Atom,
- **u**: die Werte 0, 1, 2 oder 3 und
- **a**: die Werte 1, 2 oder 3 und
- **y**: die Werte 1, 2 oder 3 bedeuten,
wobei 2-(tert.-Butyldimethylsilyl)-thiazol ausgenommen ist.

Es gilt in allen Formeln die Vierwertigkeit des Siliciumatoms.

Die Reste **R** können die Bedeutungen von **R**^{**1**} annehmen und zusätzlich in α-Position zum Silicium-Atom unverzweigt sein. **R** bedeutet vorzugsweise substituierte oder unsubstituierte Alkylreste mit 1 bis 20 Kohlenstoff-Atomen, wie den Methyl-, Ethyl-, Propyl-, iso-Propyl-, Butyl-, iso-Butyl-, tert.-Butyl-, 1,1-Dimethyl-2-methylpropyl-, 3,3,3-Trifluorpropyl-, 3-Chlorpropylrest oder einen Cycloalkylrest mit 5 bis 8 Kohlenstoffatomen, wie den Cyclopentyl- oder den Cyclohexylrest oder einen Arylrest wie den Phenylrest.

Bevorzugt handelt es sich bei dem Rest **R** um ein Wasserstoff-Atom, den Methyl-, iso-Propyl- bzw. Phenylrest, besonders bevorzugt um den Methylrest.

**R**^{**1**} ist vorzugsweise ein in α-Position zum Silicium-Atom verzweigter sekundärer oder tertiärer Kohlenwasserstoffrest mit höchstens 20, insbesondere höchstens 15 Kohlenstoffatomen, vorzugsweise Alkylrest.

Beispiele für bevorzugte tertiäre Kohlenwasserstoffreste sind der tert.-Butyl-, 1,1-Dimethylpropyl-, 1,1-Diethylpropyl-,1,1-Dimethyl-2-methylpropylrest oder ein Arylgruppen enthaltender Kohlenwasserstoffrest, wie der 1,1-Dimethyl-2-phenylethylrest, besonders bevorzugt der tert.-Butylrest.

Beispiele für bevorzugte sekundäre Kohlenwasserstoffreste **R**^{**1**} sind der iso-Propyl-, iso-Butyl, iso-Pentyl-, Cyclobutyl-, Cyclopentyl-, Cyclohexyl-, Cycloheptyl- und Cyclooctylrest, wobei der iso-Propylrest bzw. der iso-Butylrest bevorzugt sind, der iso-Propylrest ist besonders bevorzugt.

Beispiele für den Kohlenwasserstoffrest, der am Stickstoffatom der Gruppe **E** substituiert ist, sind Alkylreste mit 1 bis 20, insbesondere 1 bis 10 Kohlenstoffatomen, wie der Methyl-, Ethyl-, Propyl-, Butyl-, iso-Butylrest, halogensubstituierte Alkylreste mit 1 bis 20 Kohlenstoffatomen, insbesondere 1 bis 10 Kohlenstoffatomen, wie der 3,3,3-Trifluorpropyl-, 3-Chlorpropylrest oder ein Cycloalkylrest mit 5 bis 8 Kohlenstoffatomen, wie der Cyclopentyl- oder der Cyclohexylrest oder ein Arylrest, wie der Phenylrest. Besonders bevorzugt handelt es sich bei der Gruppe **E** um die Methyl-, Ethyl- oder Phenylaminogruppe, besonders bevorzugt um die Methylaminogruppe.

Besonders bevorzugte Silane der allgemeinen Formel (I) sind
2-(tert.-Butyldimethylsilyl)-1-methylimidazol,
2-(tert.-Butyldiphenylsilyl)-1-methylimidazol,
2-(1,1-Dimethylpropyldimethylsilyl)-1-methylimidazol,
2-(1,1-Dimethylpropyldiphenylsilyl)-1-methylimidazol,
2-(1,1-Dimethyl-2-methylpropyldimethylsilyl)-1-methylimidazol,
Bis[2-(1-methylimidazoyl)]di(tert.-butyl)silan,
tert.-Butyltris[2-(1-methylimidazoyl)]silan,
2-[Di(tert.-butyl)methylsilyl]-1-methylimidazol,
2-(iso-Propyldimethylsilyl)-1-methylimidazol,
2-(iso-Propyldiphenylsilyl)-1-methylimidazol,
2-(Di-iso-propylmethylsilyl)-1-methylimidazol,
2-(Tri-iso-propylsilyl)-1-methylimidazol,
Bis[2-(1-methylimidazoyl]di-iso-propylsilan,
iso-Propyltris[2-(1-methylimidazoyl)]silan,
2-(iso-Butyldimethylsilyl)-1-methylimidazol,
2-(Cyclohexyldimethylsilyl) -1-methylimidazol.

Anstelle der 2-(1-Methylimidazol)-Derivate sind auch die entsprechenden 2-Oxazol, 2-Thiazol, 2-Benzimidazol, 2-Benzoxazol- und die 2-Benzothiazol-Derivate besonders bevorzugt.

Gegenstand der Erfindung ist auch ein Verfahren zur Herstellung der Silane der allgemeinen Formel (I), bei dem metallierte Heterozyklen der allgemeinen Formeln (IV) bzw. (V), 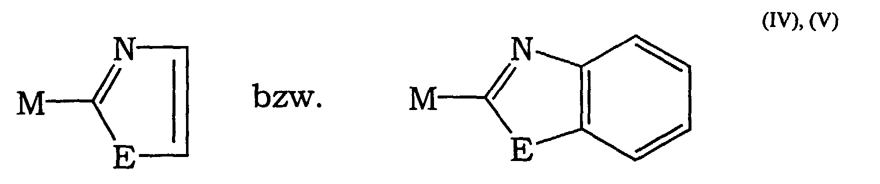 mit Silanen der allgemeinen Formel (VI)

RᵤR¹_{y}Si(X)ₐ (VI),

in einem aprotischen Lösemittel umgesetzt werden, wobei
- **M**: ein Metall der ersten, zweiten oder dritten Hauptgruppe oder einer Nebengruppe des Periodensystems und
- **X**: ein Halogenatom bedeuten und
- **R**, **R**^{**1**}, **X**, **E**, **u**, **a** und **y**: die vorstehenden Bedeutungen aufweisen.

Die Silane der allgemeinen Formel (I) können nicht nur in situ sondern auch als Reinsubstanz isoliert werden.
Bemerkenswert ist, daß aufgrund der schondenden Herstellung die Silane der allgemeinen Formel (I), insbesondere 2-(tert.-Butyldimethylsilyl)-1-methylimidazol durch destillative Aufarbeitung als Reinsubstanz isolierbar sind, ohne beispielsweise über den N-Methylimidazolring thermisch induzierte Cycloadditionen einzugehen und so zu dimerisieren.

Selbst die reaktive bzw. labile Silicium-(Heterocyclus-)-Kohlenstoff-Bindung bleibt stabil durch die Aufarbeitung mit sehr geringer thermischer Belastung.
Das Verfahren liefert eine hohe Ausbeute und Reinheit an Silan der allgemeinen Formel (I) bei kurzer Reaktionszeit und benötigt weder einen Katalysator noch eine zusätzliche Aktivierung z.B. durch einen Lösemittelbestandteil.

Silane der allgemeinen Formel (I), insbesondere wenn die Gruppe E ein substituiertes Stickstoffatom ist, werden direkt nach der Umsetzung, d.h. ohne weiteren Reinigungsschritt, wie Destillation in einer Reinheit von mindestens 80% erhalten.

Vorzugsweise wird **M** ausgewählt aus Lithium, Natrium, Kalium, Magnesium, Aluminium, Kupfer und Zink, wobei Lithium besonders bevorzugt ist.

Bei dem Heterozyklus der allgemeinen Formeln (IV) bzw. (V), handelt es sich vorzugsweise, um 2-Lithio-1-methylimidazol und 2-Lithiooxazol, besonders bevorzugt um 2-Lithio-1-methylimidazol.

Bei dem Heterozyklus der allgemeinen Formeln (IV) bzw. (V) handelt es sich vorzugsweise um
tert.-Butyldimethylchlorsilan,
tert.-Butyldiphenylchlorsilan,
1,1-Dimethylpropyldimethylchlorsilan,
1,1-Dimethylpropyldiphenylchlorsilan,
1,1-Dimethyl-2-methylpropyldimethylchlorsilan,
Di(tert.-butyl)dichlorsilan,
tert.-Butyltrichlorsilan,
Di-(tert.-butyl)methylchlorsilan.

Im Fall der sekundären Kohlenwasserstoff-Reste handelt es sich vorzugsweise um
iso-Propyldimethylchlorsilan,
iso-Propyldiphenylchlorsilan,
Di-iso-propylmethylchlorsilan,
Tri-iso-propylchlorsilan,
Di-iso-propyldichlorsilan,
iso-Propyltrichlorsilan,
iso-Butyldimethylchlorsilan,
Cyclohexyldimethylchlorsilan.

**X** steht für ein Halogen-Atom, wie das Chlor-, Brom- oder Iod-Atom, bevorzugt um das Chlor- bzw. Brom-Atom, insbesondere das Chlor-Atom.

Der metallierte Heterozyklus der allgemeinen Formeln (IV) bzw. (V), und das Halogensilan der allgemeinen Formel (VI) werden pro Halogen-Atom im Molverhältnis von 0.6:1 bis 1.4:1, bevorzugt im Verhältnis 0.8:1 bis 1.2:1, besonders bevorzugt im Verhältnis 1:1 miteinander umgesetzt.

Die erfindungsgemäße Reaktion wird bevorzugt bei einer Temperatur zwischen -30°C und 160°C, besonders bevorzugt zwischen 0°C und 40°C, durchgeführt.

Wahlweise kann das 2-(Benz-)Imidazol-, 2-(Benz-)Oxazol- und 2-(Benz-)Thiazol-substituierte Silan der allgemeinen Formel (I) durch Destillation als Reinsubstanz aus der Reaktionsmischung oder nach Zusatz eines geeigneten Solvens als entsprechende Lösung destilliert werden.

Die Umsetzung kann in einem apolar aprotischen, polar aprotischen, Lösemittel oder einer Kombination solcher Lösemittel erfolgen.

Bei dem erfindungsgemäßen Verfahren können reine aprotische polare oder aprotische unpolare organische Lösemittel oder deren Mischungen verwendet werden. Die Lösemittel können koordinierend oder nicht-koordinierend sein. Vorzugsweise weisen die Lösungsmittel oder deren Mischungen einen Siedepunkt von höchstens 250°C, insbesondere höchstens 200°C bei 1013 hPa auf.
Beispiele für aprotische geeignete organische Lösemittel sind Kohlenwasserstoffe, wie gesättigte lineare Kohlenwasserstoffe, bevorzugt Hexan oder Heptan; gesättigte cyclische Kohlenwasserstoffe, bevorzugt Cyclohexan; ungesättigte Kohlenwasserstoffe, bevorzugt aromatische Kohlenwasserstoffe, wie z.B. Benzol, Toluol, Xylol; Ether, bevorzugt Diethylether, Di-n-butylether, tert.-Butylmethylether, Dimethoxyethan, cyclische Ether; oder andere, Heteroatom-substituierte Verbindungen wie z.B., Amine, bevorzugt Tributylamin oder Pyridin.
Falls Lösemittel eingesetzt werden, handelt es sich um Mengen von vorzugsweise, 0.01-1000, insbesondere 1-100 Gewichtsäquivalente bezogen auf das Gesamtgewicht der reaktiven Komponenten der allgemeinen Formeln (IV) bzw. (V), und (VI). Bei der Verwendung von Lösemitteln werden diese nach der erfindungsgemäßen Umsetzung vorzugsweise entfernt.

Der metallierte Heterozyklus der allgemeinen Formeln (IV) bzw. (V), wird hergestellt durch Deprotonierung mit einem Metall wie z.B. Lithium oder Aluminium, einem Metallhydrid wie Lithium-, Natrium-, Kalium-, Magnesium-, Lithiumaluminiumhydrid, Kupfer- oder Zinkhydrid, einem metallorganischen Reagenz, bevorzugt, aber nicht ausschließlich Lithium-, Natrium-, Kalium-, Aluminium-Organylen, besonders bevorzugt Lithiumorganylen, oder einem (an-)organischen Salz, bevorzugt, aber nicht ausschließlich Lithium- bzw. Natriumamiden, besonders bevorzugt Lithiumamid, Natriumamid, Lithium-bis-(trimethylsilyl)-amid bzw. Natrium-bis-(trimethylsilyl)-amid oder Lithiumdiisopropylamid (LDA). Die Metallierung kann auch durch Alkoholate wie z.B. Natrium- oder Kalium-tert.-butylat oder Metall-Basen-Kombinationen wie z.B. Li/NH₃/NH₄Cl oder durch Kombinationen der oben aufgeführten Basen erfolgen.

Die nach dem erfindungsgemäßen Verfahren hergestellten Silane der allgemeinen Formel (I) finden insbesondere für synthetische (z.B. Bereich der Pharmasynthese oder Agrochemie) und analytische Zwecke Anwendung.

Es ist z.B. möglich, Reaktionen, wie Substitutions-, Deprotonierungs-, Additionsreaktionen usw. an den Silyl-substituierten Heterozyklen durchzuführen, dies aber nicht nur unter Anwesenheit von bis heute hauptsächlich verwendbaren Trimethylsilyl-Funktionen. Mit den Silanen der allgemeinen Formel (I) ist es möglich, sowohl das zwischen den zwei Hetero-Atomen gelegene Kohlenstoff-Atom des Heterozyklus zu schützen und sich gleichzeitig bei Folgereationen am Heterozyklus den sterischen Anspruch der tertiären bzw. sekundären Kohlenwasserstoff-Gruppen an den Silyl-Gruppen zunutze zu machen und so bestimmte Selektivitäten zu erreichen.

Nach den Reaktionen ist es möglich, die "Silyl-Schutzgruppe" in 2-Position des entsprechenden Heterozyklus durch Si-C-Spaltungsreaktionen selektiv zu entfernen.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, wurden die nachstehenden Beispiele bei einem Druck der umgebenden Atmosphäre, also etwa 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.
* bedeutet: 2-Position kennzeichnet die Stellung zwischen den beiden Heteroatomen

### Beispiele

### Beispiel 1 (Herstellung von 2-(tert.-Butyldimethylsilyl)-1-methylimidazol):

Zu einer Mischung von 375 ml (0.6 mol) n-BuLi/Hexan (1.6 M) und 900 ml Diethylether wurden bei Raumtemperatur über einen Zeitraum von 80 Min 49.3 g (0.6 mol) 1-Methylimidazol getropft.

Nach einem 1 stündigen Erhitzen unter Rückfluß wurden bei einer Temperatur von 23°C über einen Zeitraum von 20 min eine 50 % Lösung von 90.4 g (0.6 mol) tert.-Butyldimethylchlorsilan in Toluol zu der entstandenen Reaktionsmischung getropft.

Nach Entfernung des Lösemittels bei 25°C / 10 mbar wurden 300 ml Hexan zu dem Reaktionsrückstand gegeben, filtriert und erneut das Lösemittel und die übrigen flüchtigen Bestandteile im Vakuum entfernt. Zur vollständigen Reinigung wurde der Reaktionsrückstand einer fraktionierten Destillation unterzogen.

### Beispiel 2 (Herstellung von 2-(tert.-Butyldiphenylsilyl)-1-methylimidazol):

Beispiel 1 wurde mit der Abänderung wiederholt, daß anstelle von 90.4 g (0.6 mol) tert.-Butyldimethylchlorsilan 164.9 g (0.6 mol) tert.-Butyldiphenylchlorsilan eingesetzt wurden.

### Beispiel 3 (Herstellung von 2-(1,1-Dimethylpropyldimethylsilyl)-1-methylimidazol):

Beispiel 1 wurde mit der Abänderung wiederholt, daß anstelle von 90.4 g (0.6 mol) tert.-Butyldimethylchlorsilan 98.9 g (0.6 mol) 1,1-Dimethylpropyldimethylchlorsilan eingesetzt wurden.

### Beispiel 4 (Herstellung von 2-(1,1- Dimethylpropyldiphenylsilyl)-1-methylimidazol):

Beispiel 1 wurde mit der Abänderung wiederholt, daß anstelle von 90.4 g (0.6 mol) tert.-Butyldimethylchlorsilan 173.3 g (0.6 mol) 1,1-Dimethylpropyldiphenylchlorsilan eingesetzt wurden.

### Beispiel 5 (Herstellung von 2-(1,1-Dimethyl-2-methylpropyldimethylsilyl)-1-methylimidazol):

Beispiel 1 wurde mit der Abänderung wiederholt, daß anstelle von 90.4 g (0.6 mol) tert.-Butyldimethylchlorsilan 107.3 g (0.6 mol) 1,1-Dimethyl-2-methylpropyldimethylchlorsilan eingesetzt wurden.

### Beispiel 6 (Herstellung von Bis[2-(1-methylimidazoyl)]di(tert.-butyl)silan):

Beispiel 1 wurde mit der Abänderung wiederholt, daß anstelle von 90.4 g (0.6 mol) tert.-Butyldimethylchlorsilan 64.0 g (0.3 mol) Di-(tert.-Butyl)-dichlorsilan eingesetzt wurden.

### Beispiel 7 (Herstellung von tert.-Butyltris[2-(1-methylimidazoyl)]silan):

Beispiel 1 wurde mit der Abänderung wiederholt, daß anstelle von 90.4 g (0.6 mol) tert.-Butyldimethylchlorsilan 38.3 g (0.2 mol) tert.-Butyltrichlorsilan eingesetzt wurden.

### Beispiel 8 (Herstellung von 2-[Di(tert.-butyl)methylsilyl]-1-methylimidazol):

Beispiel 1 wurde mit der Abänderung wiederholt, daß anstelle von 90.4 g (0.6 mol) tert.-Butyldimethylchlorsilan 115.7 g (0.6 mol) Di-(tert-Butyl)-methylchlorsilan eingesetzt wurden.

### Beispiel 9 (Herstellung von 2-(iso-Propyldimethylsilyl)-1-methylimidazol):

Beispiel 1 wurde mit der Abänderung wiederholt, daß anstelle von 90.4 g (0.6 mol) tert-Butyldimethylchlorsilan 82.0 g (0.6 mol) iso-Propyldimethylchlorsilan eingesetzt wurden.

### Beispiel 10 (Herstellung von 2-(iso-Propyldiphenylsilyl)-1-methylimidazol):

Beispiel 1 wurde mit der Abänderung wiederholt, daß anstelle von 90.44 g (0.6 mol) tert-Butyldimethylchlorsilan 156.5 g (0.6 mol) iso-Propyldiphenylchlorsilan eingesetzt wurden.

### Beispiel 11 (Herstellung von 2-(Di-iso-propylmethylsilyl)-1-methylimidazol):

Beispiel 1 wurde mit der Abänderung wiederholt, daß anstelle von 90.4 g (0.6 mol) tert-Butyldimethylchlorsilan 98.9 g (0.6 mol) Di-iso-propylmethylchlorsilan eingesetzt wurden.

### Beispiel 12 (Herstellung von 2-(Tri-iso-propylsilyl)-1-methylimidazol):

Beispiel 1 wurde mit der Abänderung wiederholt, daß anstelle von 90.4 g (0.6 mol) tert-Butyldimethylchlorsilan 115.7 g (0.6 mol) Tri-iso-propylchlorsilan eingesetzt wurden.

### Beispiel 13 (Herstellung von Bis[2-(1-methylimidazoyl]di-iso-propylsilan):

Beispiel 1 wurde mit der Abänderung wiederholt, daß anstelle von 90.4 g (0.6 mol) tert.-Butyldimethylchlorsilan 55.6 g (0.3 mol) Di-iso-propyldichlorsilan eingesetzt wurden.

### Beispiel 14 (Herstellung von iso-Propyltris[2-(1-methylimidazoyl)]silan):

Beispiel 1 wurde mit der Abänderung wiederholt, daß anstelle von 90.4 g (0.6 mol) tert.-Butyldimethylchlorsilan 35.5 g (0.2 mol) iso-Propyltrichlorsilan eingesetzt wurden.

### Beispiel 15 (Herstellung von 2-(iso-Butyldimethylsilyl)-1-methylimidazol):

Beispiel 1 wurde mit der Abänderung wiederholt, daß anstelle von 90.4 g (0.6 mol) tert.-Butyldimethylchlorsilan 90.4 g (0.6 mol) iso-Butyldimethylchlorsilan eingesetzt wurden.

### Beispiel 16 (Herstellung von 2-(Cyclohexyldimethylsilyl)-1-methylimidazol):

Beispiel 1 wurde mit der Abänderung wiederholt, daß anstelle von 90.4 g (0.6 mol) tert.-Butyldimethylchlorsilan 106.1 g (0.6 mol) Cyclohexyldimethylchlorsilan eingesetzt wurden.

### Beispiel 17 (Herstellung von 2-(tert.-Butyldimethylsilyl)-1-methylbenzimidazol) *

Beispiel 1 wurde mit der Abänderung wiederholt, daß anstelle von 49.3 g (0.6 mol) 1-Methylimidazol 79.3 g (0.6 mol) 1-Methylbenzimidazol eingesetzt wurden.

### Beispiel 18 (Herstellung von 2-(tert.-Butyldimethylsilyl)oxazol):

Beispiel 1 wurde mit der Abänderung wiederholt, daß anstelle von 49.3 g (0.6 mol) 1-Methylimidazol 41.4 g (0.6 mol) Oxazol eingesetzt wurden.

### Beispiel 19 (Herstellung von 2-(tert.-Butyldimethylsilyl)benzoxazol)*:

Beispiel 1 wurde mit der Abänderung wiederholt, daß anstelle von 49.3 g (0.6 mol) 1-Methylimidazol 71.5 g (0.6 mol) Benzoxazol eingesetzt wurden.

### Beispiel 20 (Herstellung von 2-(tert.-Butyldimethylsilyl)thiazol):

Beispiel 1 wurde mit der Abänderung wiederholt, daß anstelle von 49.3 g (0.6 mol) 1-Methylimidazol 132.7 g (0.6 mol) Thiazol eingesetzt wurden.

### Beispiel 21 (Herstellung von 2-(tert.- Butyldimethylsilyl)benzothiazol)*:

Beispiel 1 wurde mit der Abänderung wiederholt, daß anstelle von 49.3 g (0.6 mol) 1-Methylimidazol 81.1 g (0.6 mol) Benzothiazol eingesetzt wurden.

### Beispiel 22 (Herstellung von 2-(tert.-Butyldimethylsilyl)-1-methylimidazol):

Beispiel 1 wurde mit der Abänderung wiederholt, daß anstelle von 375 ml (0.6 mol) BuLi/Hexan (1.6 M) 13.8 g (0.6 mol) Lithiumamid eingesetzt wurden.

### Beispiel 23 (Herstellung von 2-(tert.-Butyldimethylsilyl)-1-methylimidazol):

Beispiel 1 wurde mit der Abänderung wiederholt, daß anstelle von 375 ml (0.6 mol) BuLi/Hexan (1.6 M) 110.0 g (0.6 mol) Natrium-bis-(trimethylsilyl)-amid eingesetzt wurden.

| **Beispiel** | **Ausbeute [g]** | **Ausbeute [%]** | **Reinheit [%]** |
|---|---|---|---|
| 1 | 138.6 | 92 | 99 |
| 2 | 173.1 | 90 | 98 |
| 3 | 108.6 | 86 | 99 |
| 4 | 170.6 | 85 | 98 |
| 5 | 117.2 | 87 | 97 |
| 6 | 159.0 | 87 | 97 |
| 7 | 175.4 | 89 | 98 |
| 8 | 130.8 | 91 | 99 |
| 9 | 98.5 | 90 | 98 |
| 10 | 156.4 | 85 | 97 |
| 11 | 107.4 | 85 | 98 |
| 12 | 123.1 | 86 | 98 |
| 13 | 149.4 | 90 | 98 |
| 14 | 164.2 | 87 | 97 |
| 15 | 103.6 | 88 | 97 |
| 16 | 117.4 | 88 | 99 |
| 17 | 133.1 | 90 | 97 |
| 18 | 94.6 | 86 | 97 |
| 19 | 126.1 | 90 | 98 |
| 20 | 108.8 | 91 | 97 |
| 21 | 127.2 | 85 | 98 |
| 22 | 102.5 | 87 | 98 |
| 23 | 101.3 | 86 | 98 |

## Patentansprüche

1. 2-(Benz-)Imidazol-, 2-(Benz-)Oxazol- und 2-(Benz-)Thiazol-substituierte Silane der allgemeinen Formel (I)
RᵤR¹_{y}Si(A)ₐ (I),
in der
**A** einen Rest der allgemeinen Formeln (II) bzw. (III), 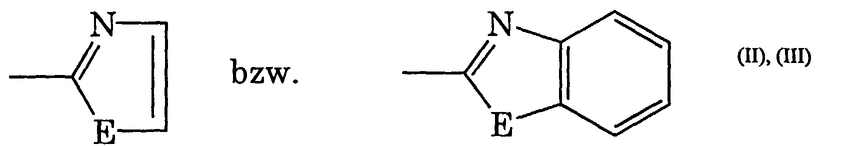
**R** ein Wasserstoff-Atom oder einen einwertigen, gegebenenfalls mit Halogen-, Sauerstoff-, Stickstoff-, Schwefel- oder Phosphoratomen substituierten Kohlenwasserstoffrest mit 1 bis 20 Kohlenstoffatomen,
**R**^{**1**} einen in α-Position zum Silicium-Atom verzweigten, einwertigen, gegebenenfalls mit Halogen-, Sauerstoff-, Stickstoff-, Schwefel- oder Phosphoratomen substituierten Kohlenwasserstoffrest mit 3 bis 30 Kohlenstoffatomen,
**E** ein Stickstoff-Atom, welches substituiert ist mit einem einwertigen, gegebenenfalls mit Halogen-, Sauerstoff-, Stickstoff-, Schwefel- oder Phosphoratomen substituierten Kohlenwasserstoffrest mit 1 bis 20 Kohlenstoffatomen, ein Sauerstoff- oder ein Schwefel-Atom,
**u** die Werte 0, 1, 2 oder 3 und
**a** die Werte 1, 2 oder 3 und
**y** die Werte 1, 2 oder 3 bedeuten,
wobei 2-(tert.-Butyldimethylsilyl)-thiazol ausgenommen ist.

2. Silane nach Anspruch 1, wobei **R** ein Wasserstoffatom, eine Methyl-, iso-Propyl- oder Phenyl-Gruppe bedeutet.

3. Silane nach Anspruch 1 oder 2, wobei **R**^{**1**} höchstens 20 Kohlenstoffatome aufweist.

4. Silane nach Anspruch 1 bis 3, wobei die Gruppe **E** eine Methyl-, Ethyl- oder Phenylamino-Gruppe ist.

5. Verfahren zur Herstellung der Silane der allgemeinen Formel (I) gemäß Anspruch 1 bis 4, bei dem metallierte Heterozyklen der allgemeinen Formeln (IV) bzw. (V), 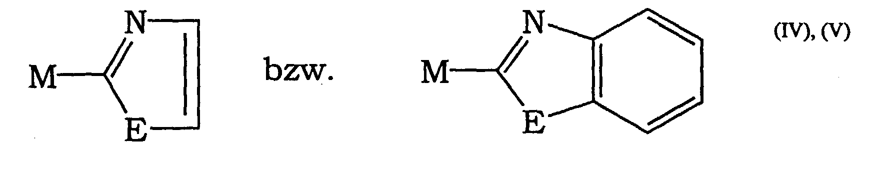 mit Silanen der allgemeinen Formel (VI)
RᵤR¹_{y}Si(X)ₐ (VI),
in einem aprotischen Lösemittel umgesetzt werden, wobei
**M** ein Metall der ersten, zweiten oder dritten Hauptgruppe oder einer Nebengruppe des Periodensystems und
**X** ein Halogenatom bedeuten und
**R, R**^{**1**}, **X**, **E**, **u**, **a und y die** in den Ansprüchen 1 bis 4 angegebenen Bedeutungen aufweisen.

6. Verfahren nach Anspruch 5, wobei **M** ausgewählt wird aus Lithium, Natrium, Kalium, Magnesium, Aluminium, Kupfer und Zink.

7. Verfahren nach Anspruch 5 oder 6, wobei das Lösemittel ausgewählt wird aus Kohlenwasserstoffen und Ethern.
